# EUROPEAN PATENT APPLICATION

(11) **EP 3 246 548 A1**
(43) Date of publication of application: **22.11.2017**
(21) Application number: 17158815.5
(22) Date of filing: 03.03.2017
(51) Int. Cl.: F02D 41/02, F01N 3/08, F02D 41/10, F01N 3/023, F01N 3/029

(54) **EXHAUST EMISSION CONTROL METHOD FOR AN INTERNAL COMBUSTION ENGINE**

(30) Priority: 03.03.2016 US 201615060266
(71) Applicant: International Engine Intellectual Property Company, LLC, Lisle, Illinois 60532 (US)
(72) Inventor: CATTANI, Luis Carlos, Aurora, IL 60504 (US); UCHANSKI, Michael, 1814 La Tour-de-Peilz (CH); RODIGUEZ, Rogelio, Plainfield, IL 60586 (US); CHEN, Jer Jason Shen, Naperville, IL 60564 (US); CIGLER, James R., Lockport, IL 60441 (US); KHADILKAR, Dileep, Naperville, IL 60564 (US); SCHIPPER, Jeremy Grant, Wayland, MI 49348 (US); SEIBERLICH, Matthew Joseph, Libertyville, IL 60048 (US); SINGH, Nishant, Kirkland, Washington 98034 (US); SILVA, Joao P., Naperville, IL 60564 (US); ADELMAN, Bradley Jay, Chicago, IL 60654 (US); MANDARAPU, Silpa, Lombard, IL 60148 (US)
(74) Representative: Kuhnen & Wacker

(57) **Abstract**

A method for controlling an internal combustion engine limits emission of undesirable compounds of nitrogen and oxygen and provides increased transient power.

## Description

### RELATED APPLICATIONS

This application is a continuation-in-part of co-pending U.S Application Serial No. 13/629,197, having a filing date of September 27, 2012.

### FIELD

This disclosure relates to operation of a compression ignition internal combustion engine and exhaust aftertreatment to limit emission of nitrogen oxides. Embodiments relate to transient increased power operation of the engine.

### BACKGROUND

Internal combustion engines are widely used to power electric generators, vehicle engines, and the like. Emissions from internal combustion engines and their impact on the environment are of increasing concern. Because of this concern, regulations that limit the amount of various emission gases that may be exhausted to the environment from these engines have been adopted. Specific attention has been directed to reducing emissions of nitrogen and oxygen compounds, including NO and N₂O, that are collectively referred to as NOₓ. These compounds are formed by in the combustion chambers of internal combustion engines when nitrogen and oxygen reach a high temperature due to combustion of fuel.

Three way catalysts, such as those used in conventional catalytic converters (referred to as TWCs) have been widely used to reduce emissions of NOₓ, from spark ignition engines. TWCs become ineffective in reducing NOₓ in exhaust when oxygen is present. This is not a significant limitation for use with spark ignition engines that operate with an air/fuel mixture near a stoichiometric point and create exhaust that has little oxygen. However, TWCs experience reduced performance as they age, even with robust catalyst materials.

Limiting undesirable emissions from compression ignition engines remains a goal of design and control of compression ignition engines and their exhaust aftertreatment systems. As used herein, exhaust refers to the constituents emitted by the engine whereas emissions refers to the constituents emitted to the atmosphere. Compression ignition engines are commonly operated with much more air entering the engine than is required for combustion of the amount of fuel provided. Such mixtures of air and fuel are referred to as "lean" while operation with less air is referred to as a "stoichiometric" or "rich" mixture. Combustion of lean air and fuel mixtures creates high temperatures within engine combustion chambers. The lean mixture includes significant amounts of oxygen that is not consumed in combustion and is available to combine with nitrogen to form NOₓ. The lean air/fuel mixture creates exhaust having a significant amount of oxygen that renders TWCs ineffective in reducing NOₓ.

Different strategies for limiting emission of NOₓ by compression ignition engines are known. One approach is to provide for selective catalytic reduction of the nitrogen and oxygen compounds in engine exhaust. Another approach is to prevent formation of NOₓ by returning engine exhaust gas to a combustion chamber of the engine, referred to as "exhaust gas recirculation" (EGR). Introducing exhaust gas into the engine combustion chamber reduces creation of NOₓ in two ways. Exhaust gas displaces air and thereby reduces the amount of oxygen available for creation of NOₓ. Exhaust gas also functions as a diluent that is heated and thereby results in lower combustion temperature in the combustion chamber.

Compression ignition engines that operate with significant exhaust gas recirculation may not require aftertreatment to reduce NOₓ emission below a predetermined level, particularly when such engines are operated at steady state conditions. However, operating a compression ignition engine with significant exhaust gas reduces the power created by the engine due to the limited amount of fuel that is combusted during such operation.

When greater power is required from a compression ignition engine, either at constant engine speed or more commonly during operation to accelerate a vehicle, more fuel must be combusted to provide the required power. Typically, higher power is required to be produced by the engine within a short period of time. The requirement that power be increased within a short response time requires both more fuel and different fueling timing than is required for prolonged low power operation.

Compression ignition engines are commonly controlled by engine control units (ECU) that monitor or determine conditions of engine operation and that operate actuators that control engine operation. Conditions that are monitored or determined may include mass air flow into the engine, intake manifold temperature and pressure and engine speed. Oxygen content of exhaust and/or intake flow may also be monitored or determined. Fuel injectors may introduce fuel into the engine for combustion. Fuel injectors may permit control of the amount, timing and pattern of injection of fuel into the engine. Compression ignition engines may also include a turbocharger that has a variable nozzle mechanism that may be controlled to control the compression (boost) of air that is provided to the engine from the turbocharger. Compression ignition engines may also have an exhaust gas recirculation valve (EGR valve) that controls the amount of exhaust gas that is diverted into the air stream to the engine. An electronic control unit (ECU) may be used to control fuel injection, turbocharger variable nozzle mechanisms and/or EGR valves for engines that include these controllable devices. The capability of ECUs to monitor and control operation of compression ignition engines provides the capability to change operation of the engine.

A shortcoming of current compression ignition engines and their associated aftertreatment systems is that they cannot achieve both keeping the NOx emissions below a predetermined level in a fuel-efficient manner during steady state operations, and also keeping the NOx emissions below the predetermined level during transient engine operation such as during accelerations or increased power of the engine.

### BRIEF SUMMARY

In one aspect of the present technology, operation of a compression ignition engine with an exhaust aftertreatment system is described that permits the engine to provide quickly increased power while maintaining emissions of NOx below a predetermined level.

An additional described aspect resides in providing an aftertreatment system for an internal combustion engine with a capacity to eliminate undesirable compounds from an exhaust gas stream during transient operation to increase power.

Another described aspect of the present technology relates to controlling an internal combustion engine to limit emission of undesirable compounds from the engine and controlling fueling of the engine during transient operation to increase power so that the exhaust stream has a composition for which aftertreatment is effective.

Yet another aspect of the present technology resides in providing an aftertreatment system for a compression ignition engine that includes a catalyst coated surface at which catalyzed reactions reduce the amount of NOₓ in exhaust during operation of the engine to provide high power.

Still another aspect of the present technology provides an engine and exhaust aftertreatment combination that includes a two catalyst system for reducing the amount of NOₓ in exhaust from a compression ignition engine during both steady state and transient operation.

Another described aspect of the present technology relates to an exhaust system that modifies the composition of exhaust gas to assure reduction of NOₓ by a three way catalyst.

It is another aspect of the present technology to provide an exhaust system for a compression ignition engine that has an active hydrocarbon injector configured to inject hydrocarbon into an exhaust stream to enhance NOx reduction over a three way catalyst converter.

Still another aspect of the present technology relates to methods wherein a determination is made as to whether a compression ignition engine is fueled by a rich air/fuel mixture, and injecting hydrocarbon into the exhaust gas before exhaust enters a three way catalyst when a rich mixture is detected.

### BRIEF DESCRIPTION OF THE DRAWINGS

FIG. 1 illustrates a schematic representation of a described compression ignition engine with exhaust aftertreatment.
FIG. 2 shows the relationship between the amount of exhaust gas in the intake mixture and the amount of nitrogen compounds in engine exhaust.
FIG. 3 shows an embodiment of an aftertreatment system.
Fig. 4 shows the amount of NOₓ emitted by an aftertreatment system for increasing power operation of a compression ignition engine at lean air/fuel mixture operation and at near stoichiometric air/fuel mixture operation.
FIG. 5 illustrates a schematic representation of a hydrocarbon injector system for an exhaust system.
FIG. 6 is a flow diagram of operations that may be executed to inject hydrocarbon into an exhaust gas of a compression ignition engine.
FIG. 7 show variations in speed and torque during transient operation of an exemplary diesel engine.
FIG. 8 show variations in NOₓ output from the TWC under the transient operations shown in FIG. 7.

### DESCRIPTION OF EMBODIMENTS

Embodiments described herein concern control of a compression ignition engine and aftertreatment of exhaust created by the engine. In particular, embodiments concern control of a compression ignition engine to limit emission of NOₓ when the engine operates to produce power at or near its capacity. In addition, embodiments concern improving transient response to requests for increased power by a compression ignition engine that has exhaust gas recirculation and limiting emission of nitrogen and oxygen compounds.

Embodiments will be described more fully hereinafter with reference to the accompanying drawings, in which embodiments are shown. Like reference numbers refer to like elements throughout. Other embodiments may, however, be in many different forms and are not limited to the embodiments set forth herein. Rather, these embodiments are examples. Rights based on this disclosure have the full scope indicated by the claims.

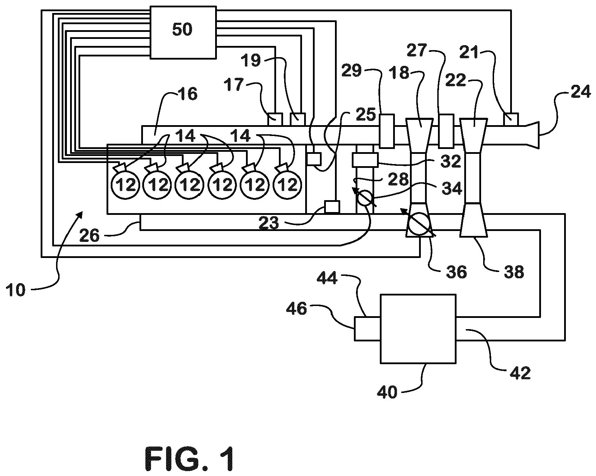

Fig. 1 shows a schematic depiction of a compression ignition engine 10 and exhaust aftertreatment apparatus 40. Operation of the compression ignition engine 10 is monitored and controlled by an ECU 50 as described below.

Air enters the engine 10 at air inlet 24. A mass air flow sensor 21 senses the amount of air entering the engine through air inlet 24. Air is directed from air inlet, 24 to the low pressure turbocharger compressor 22 which compresses the air. Compressed air is directed from the low pressure turbocharger compressor 22 to the high pressure turbocharger compressor 18 which further compresses the air. Compressed air is then directed to an intake manifold 16. As further described below, an exhaust gas recirculation system 28 selectively directs exhaust gas into the compressed air entering the intake manifold 16.

Air and, under some operating conditions, exhaust enters the cylinders 12 of the engine 10 through the intake manifold 16. An intake flow temperature sensor 19 and an intake flow pressure sensor 17 are mounted to the intake manifold 16 to measure the temperature and pressure of the flow entering the cylinders 12 of the engine 10. An injector 14 is provided for each cylinder 12 to inject fuel into the cylinder 12.

After combustion of fuel in the cylinders 12, exhaust from the cylinders 12 is directed to an exhaust manifold 26. The exhaust manifold 26 directs exhaust to a connection to the exhaust recirculation system 28 and to the high pressure turbocharger turbine 36. An exhaust oxygen sensor 23 measures the amount of oxygen in the exhaust leaving the engine 10. Oxygen sensor 23 may be a lambda sensor.

The exhaust gas recirculation system 28 provides a passage for exhaust leaving the exhaust manifold 26 to enter the flow of compressed air from the turbocharger compressor 18 entering the intake manifold 16. The exhaust entering the exhaust recirculation system 28 is directed to a controllable EGR valve 34 and then to an exhaust cooler 32 that lowers the temperature of exhaust. Exhaust is then directed into the flow of compressed air from the turbocharger compressor 18. The pressure of exhaust in the exhaust manifold 26 is higher than pressure in the intake manifold 16 thereby causing exhaust to flow from the exhaust manifold 26, through the exhaust gas recirculation system 28, and into the intake manifold 16.

Exhaust that does not flow through the exhaust recirculation system 28 flows to and through the high pressure turbocharger turbine 36. The high pressure turbocharger turbine 36 is driven by exhaust from the exhaust manifold 26 and drives the high pressure turbocharger compressor 18. The high pressure turbocharger turbine 36 includes a controllable variable nozzle. Opening that controllable variable nozzle decreases driving of the high pressure turbocharger turbine 36 and consequently decrease compression of air by the high pressure turbocharger compressor 18. Opening the variable nozzle of the high pressure turbocharger turbine 36 also decreases resistance of the high pressure turbocharger turbine 36 to flow of exhaust, thereby lowering pressure of exhaust within the exhaust manifold 26 and exhaust gas recirculation system 28. Conversely, closing the variable nozzle of the high pressure turbocharger turbine 36 increases pressure of exhaust within the exhaust manifold 26, increases driving of the high pressure turbocharger turbine 36, and increases compression of air by the high pressure turbocharger compressor 18.

Exhaust is directed from the high pressure turbocharger turbine 36 to a low pressure turbocharger turbine 38 that drives the low pressure compressor 22. Exhaust is directed from the low pressure turbocharger turbine 38 to an inlet 42 of the exhaust aftertreatment system 40.

The aftertreatment system 40 is configured to reduce the amount of undesirable components of exhaust. As further described below, the configuration and operation of the engine 10 creates exhaust having characteristics that are the basis for the configuration of the aftertreatment system 40. Exhaust that has been subjected to treatment by the aftertreatment system 40 exits the aftertreatment system 40 at exit 44 from which it is directed to an exhaust discharge outlet 46.

The ECU 50 controls operation of the engine 10 based on measurements provided by engine sensors. Signals indicative of various engine conditions may be provided to the ECU 50, such as by an intake mixture pressure sensor 17, intake mixture temperature sensor 19, mass air flow sensor 21, exhaust oxygen sensor 23 and/or an engine speed sensor 25 which may send signals to the ECU 50 as indicated in Fig. 1. The ECU 50 controls each of the injectors 14 to control the timing and amount of fuel that is injected into the cylinder 12. The ECU 50 also controls the controllable EGR valve 34 to open and close the valve 34 thereby increasing and decreasing the flow of exhaust gas into the intake manifold 16. The ECU 50 also controls the variable nozzle of the high pressure turbocharger turbine to increase and decrease compression of air by the high pressure turbocharger compressor 18.

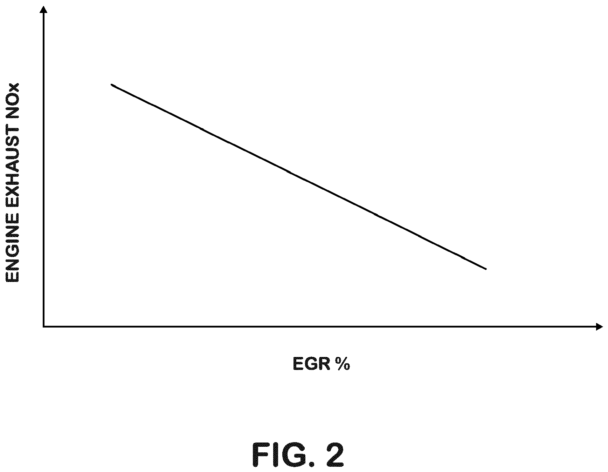

Conventional operation of a compression ignition engine provides more air to the engine than is required for combustion of the fuel provided. Under low load conditions, the air to fuel ratio can be in the range of 50:1 to 100:1. Under such conditions, displacing an amount of air by mixing exhaust gas with air entering the engine does not unacceptably reduce the power produced by the engine. Under such low load conditions, the exhaust gas recirculation system 28 of the compression ignition engine 10 can reduce the formation of nitrogen and oxygen compounds by the engine 10. Because exhaust gas includes a significant amount of inert diluent and because the exhaust gas is cooled before combining with air entering the engine 10, the presence of exhaust gas in the cylinder 12 reduces the temperature in the cylinders 12 due to combustion and thereby reduces the creation of nitrogen and oxygen compounds. Figure 2 shows the relationship between the amount of engine exhaust in the intake mixture and the amount of nitrogen and oxygen compounds in the engine exhaust for low load operation of the engine.

Operation of the exhaust recirculation system 28 to introduce cooled exhaust gas into the intake stream into the engine 10 both reduces the formation of NOx and reduces the power produced by the engine 10. The power created by the engine 10 is reduced because the amount of air that is available for supporting combustion is reduced by the amount of the inert components of the exhaust gas. This is not a significant disadvantage when high power is not required from the engine. For example, an internal combustion engine that powers a vehicle is not required to produce power at or near its capacity for long periods of time, such as when the vehicle maintains a constant speed on a surface that offers little resistance to movement of the vehicle. Such cruising may only require engine power in the range of one half to three quarters the fully fueled engine power. Combining a lean mixture and exhaust gas recirculation creates an operating condition in which both fuel economy and low emission of nitrogen and oxygen compounds are achieved. For instance, a lean air/fuel mixture supplied to the engine combined with a sufficient amount of recirculated exhaust gas fed back into the engine may be sufficient to maintain the NOₓ level in the engine exhaust below a predetermined level, which predetermined level may be a governmentally imposed limit such as for instance the current 0.2gNOx/hp-hr limit, or a future more stringent limit.

When power near the capacity of a compression ignition engine is required, such as to accelerate a vehicle, operation of the engine changes significantly. Internal combustion engines convert energy from combustion of fuel into mechanical energy. An increase in mechanical power from an internal combustion engine requires an increase in the amount of fuel consumed by combustion in the engine. To increase power of a compression ignition engine to near its capacity, the amount of fuel provided to the cylinders must be increased to the capacity of the engine to combust the fuel. That capacity depends on the amount of air available for combustion. To increase the power of a compression ignition engine, both the amount of air and the amount of fuel provided to the engine must be increased. For acceleration of a vehicle, increased power is typically required within a short response period after power is requested of the engine, such as by way of depressing or tipping in of the accelerator pedal.

Under conditions for which a compression ignition engine is required to produce power near its capacity, such as to rapidly accelerate a vehicle, introducing exhaust into the stream of air entering the engine is a significant disadvantage. To the extent that the exhaust displaces air from the flow entering the cylinders 12, the exhaust lowers the capacity of the engine to consume fuel. Further, diverting exhaust to the intake stream reduces energy that is available to drive turbochargers. Referring again to the representative configuration of Fig. 1, air is provided to cylinders 12 of the engine 10 by the high pressure turbocharger compressor 18 which received air from the low pressure turbocharger compressor 22. The exhaust that is diverted by way of EGR into the intake flow is not available to drive the turbocharger turbines 36 and 38 thereby lowering their capacity to drive the compressors 18 and 22, respectively, and lowering the compression of air forced into the cylinders 12. Under conditions such as transient increased power, even a lean air/fuel supply together with heavy exhaust gas recirculation may not be sufficient to limit emissions of NOₓ to an acceptable level, such as below a predetermined level (which may be governmentally imposed or may be desirable for other reasons).

Power of the compression ignition engine 10 is increased by increasing the amount of air entering the engine and providing as much fuel as can be combusted by the available air. Fueling the engine by the injectors 14 is a straightforward control available from the ECU 50. Increasing the amount of air provided to the cylinders 12 is less direct. Air is provided to the intake manifold 16 by the turbocharger compressors 18 and 22, which are driven by the turbines 36 and 38, respectively. Two controls are available to increase the power produced by the high pressure turbocharger turbine 36. Closing the controllable EGR valve 34 (partially or fully) increases the amount of exhaust that is available to drive the high pressure turbocharger turbine 36. In addition, further closing the controllable variable nozzle of the high pressure turbocharger turbine 36 increases the pressure of exhaust driving the high pressure turbocharger turbine 36 and increases the power produced by that turbine.

When power is demanded of the engine 10 that is at or near its capacity, the ECU 50 invokes a fueling strategy that provides an air fuel mixture to the cylinders 12 that is at or richer than the stoichiometric ratio. Operating the engine 10 with a richer than stoichiometric air/fuel mixture and without exhaust gas recirculation creates an exhaust stream that has a relatively large amount of NOₓ and is also low in oxygen and high in hydrocarbons and carbon monoxide. The fueling pattern, that is the timing and duration of introduction of fuel may be changed as the amount of fuel provided is increased or decreased. Fueling for a lean air/fuel mixture may be by providing a pilot injection and a main injection of fuel. Richer mixtures can increase production of soot by a compression ignition engines. The amount of soot that is produced during fueling of rich mixtures may be reduced by fuel injection pattern and timing as disclosed by patent application entitled "Fuel Injection Pattern and Timing" filed of even date herewith.

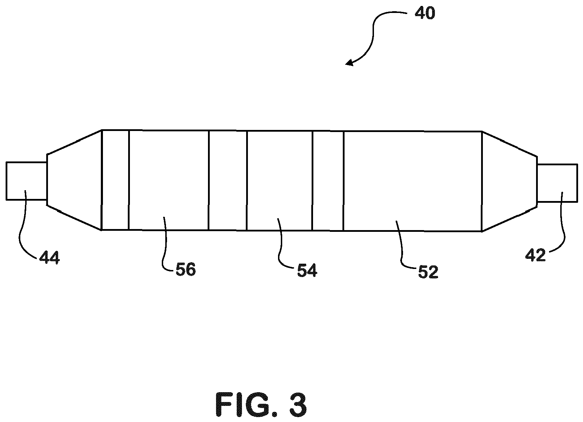

Figure 3 shows an aftertreatment system 40 that is configured to maintain acceptable emissions (i.e. maintain emissions below a predetermined level) throughout steady state and transient operating conditions, by utilizing the treatment of exhaust from the engine 10. Exhaust enters the inlet 42 and is directed to through a diesel oxidation catalyst 52. The diesel oxidation catalyst 52 is formulated to reduce the amount of NOx in the exhaust under steady state/lean operating conditions. For instance, the diesel oxidation catalyst 52 may be formulated to reduce NOx in exhaust under conditions in which hydrocarbons are present in the exhaust and/or otherwise available at the diesel oxidation catalyst, and the diesel oxidation catalyst 52 is in a desired, sufficiently high temperature range, which may be for instance between approximately 150°C and 200°C. The diesel oxidation catalyst 52 may also be formulated to reduce the amounts of carbon monoxide, hydro carbons, soluble organic fraction, polynuclear aromatic hydrocarbons and/or other components that are present in exhaust from the engine 10 during operation with a lean air fuel mixture and exhaust gas recirculation.

After passing through the diesel oxidation catalyst 52, the exhaust passes through a three way catalyst 54, which may be a catalytic converter as is well known in the automotive/spark ignition art. The three way catalyst 54 is formulated to reduce NOx in the exhaust under certain conditions, such as those realized during transient increases in engine power. The three way catalyst may also be formulated to reduce hydrocarbons, carbon monoxide, and/or other undesirable components. The three way catalyst 54 functions effectively in reducing NOx for exhaust having low oxygen content such as the exhaust created by fueling the engine 10 at about a stoichiometric or richer than stoichiometric air to fuel ratio, such as is realized during transient increases in engine power. This fueling creates exhaust having increased amount of carbon monoxide (CO). By the nature of its reductant properties, CO reduces the NOₓ as the exhaust passes through the three way catalyst in accordance with the following reactions:

NO + CO → ½ N₂ + CO₂

2NO + CO → N₂O + CO₂

In this way, the three way catalyst reduces emissions of NOₓ for rich fueling conditions when EGR system 28 is not active to reduce creation of NOₓ.

During operation of the engine 10 with a lean air/fuel mixture, the EGR system 28 reduces formation of NOₓ thereby keeping the level of NOₓ in exhaust entering the aftertreatment system 40 at a low level (such as below a predetermined level). When fueling of the engine 10 is increased to increase power created by the engine 10, exhaust recirculation is reduced or stopped as described above. As a result, the levels of NOₓ and CO in the exhaust entering the aftertreatment system 40 increase. As the air/fuel ratio provided to the cylinder 12 reaches stoichiometry or rich, the amount of oxygen decreases and the three way catalyst 54 becomes active to reduce the level of NOₓ in exhaust passing through the aftertreatment system 40. The three way catalyst thereby provides instantaneous and real time reduction of NOₓ in exhaust passing through the aftertreatment system 40 during transient operation of the engine 10 to increase power.

In some embodiments, the diesel oxidation catalyst 52 is formulated to reduce NOₓ in engine exhaust during both lean as well as stoichiometric/rich operating conditions. In other embodiments, the diesel oxidation catalyst 52 is formulated to reduce NOₓ in engine exhaust under one or the other of lean or non-lean (stoichiometric/rich) operating conditions.

In some embodiments the diesel oxidation catalyst 52 is sized and formulated to provide sufficient NOx reduction for an engine having a given NOx out level in its exhaust during steady state operation with a lean air/fuel ratio that the diesel oxidation catalyst-and-engine combination is able to keep NOx emissions below a predetermined level during steady state operation. Under some operating conditions and/or for certain engines, it may be possible to keep the NOx in the exhaust from the engine below a predetermined level during steady state operation even without the need for additional NOx reduction across the diesel oxidation catalyst to keep the NOx emissions below a predetermined level during steady state operation. However, under some operating conditions and/or for certain engines, it may not be possible to keep the NOx in the exhaust from the engine below a predetermined level during steady state operation, and it may be necessary to utilize the additional NOx reduction provided by a diesel oxidation catalyst 52 sized and formulated to provide sufficient additional NOx reduction of the exhaust to keep NOx emissions below a predetermined level during steady state operation.

In some embodiments, NOx emissions are kept below a predetermined level during transients or increased power of the engine by using a three way catalyst 54 which is sized and formulated to provide sufficient additional reduction of NOx in the engine exhaust - in addition to the reduction of NOx provided by the diesel oxidation catalyst - so that the combination of NOx reduction attributable to both the diesel oxidation catalyst 52 and the three way catalyst 54 is sufficient to keep the NOx level in the emissions below a predetermined level regardless of the transient operations of the engine.

Accordingly, by providing an exhaust system having both a diesel oxidation catalyst 52 and a three way catalyst 54, and suitably formulating and sizing the diesel oxidation catalyst 52 and suitably formulating and sizing the three way catalyst 54, NOx emissions can be kept below a predetermined level throughout both steady state/lean operation of the engine and transient/stoichiometric or rich operation of the engine. That is, certain embodiments assure NOx emissions are kept below a predetermined level regardless of how the engine is controlled by a driver, so that for instance an engine can meet regulatory NOx limits throughout its operation.

In instances in which there are limits or restrictions on the formulation and/or size of the diesel oxidation catalyst 52, the controller may control the engine so that it does not achieve its maximum power rate increase even if this is demanded by the operator, so that the level of NOx in the engine exhaust is always kept sufficiently low that the level of NOx in the engine exhaust itself, or the level of NOx in the engine exhaust as further reduced by the diesel oxidation catalyst, is kept below a predetermined level.

Finally, after passing through the three way catalyst 54, exhaust may pass through the diesel particulate filter 56. The diesel particulate filter 56 captures particulate matter in the exhaust. It will be appreciated that any two or more of the diesel oxidation catalyst 52, three way catalyst 54 and diesel particulate filter 56 may be combined as a single unit (Fig. 3 depicts all three as a single unit) may be separate components or may be otherwise combined. The order in which exhaust passes through the diesel oxidation catalyst 52 and three way catalyst 54 may also be other than as depicted (exhaust may pass through the three way catalyst 54 before passing through the diesel oxidation catalyst 52, or exhaust may pass through the diesel oxidation catalyst 52 before passing through the three way catalyst 54).

In accordance with various structures and methods disclosed herein, an engine and aftertreatment system are provided which are able to keep NOx emissions below a predetermined level (such as 0.2g NOx/hp-hr, or 0.1g NOx/hp-hr, or 0.02g NOₓ/hp-hr, etc. as may be desired or required) throughout operation of the engine in both steady state and transient modes.

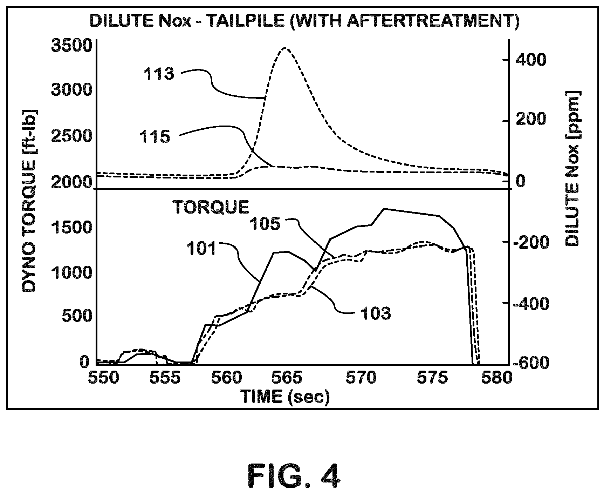

Figure 4 shows levels of NOₓ in emissions leaving the outlet 44 of the aftertreatment system 40 for operation of the engine 10 with a constant percent of EGR provided to the engine while the torque produced by the engine is increased. Levels of NOₓ in the emissions for two fuel mixtures are shown by Fig. 4, one for engine operation at a lean air/fuel mixture and one for engine operation at an approximately stoichiometric air/fuel mixture. The lower graph of figure 4 shows a torque demand curve 101, a curve 103 that shows the torque produced by the engine at operation with a lean air/fuel mixture, and a curve 105 that shows the torque produced by the engine at operation at an approximately stoichiometric air/fuel mixture. Those torque curves show that approximately the same torque response can be achieved by the approximately stoichiometric mixture as the lean mixture.

The amount of NOₓ emitted for those two air/fuel mixtures during a time that includes increasing torque is shown by the upper curves of Fig. 4. Curve 113 is the level of NOₓ emissions for lean air/fuel mixture operation, and curve 115 is the level of NOₓ emissions for approximately stoichiometric air/fuel mixture operation. Those emissions curves demonstrate the effectiveness of the aftertreatment with a TWC to substantially prevent increased emission NOₓ during transient operation of the engine to increase engine torque.

Fueling a compression ignition engine with a rich air/fuel mixture produces less CO than is produced by a comparable spark ignition gasoline engine. Therefore, the amount of NOₓ that is reduced by CO in exhaust of a compression ignition engine is limited. Reduction of NOₓ by the TWC 54 may be increased by introducing hydrocarbons (HC) into the exhaust of a compression ignition engine upstream from the TWC. When hydrocarbon (HC) is injected into the exhaust stream, it reacts with the NOₓ in the exhaust stream as the exhaust stream flows over the TWC 54 in accordance with the following equation, with the byproducts being nitrogen, carbon dioxide, and water:

HC + NO → N₂ + CO₂ + H₂O

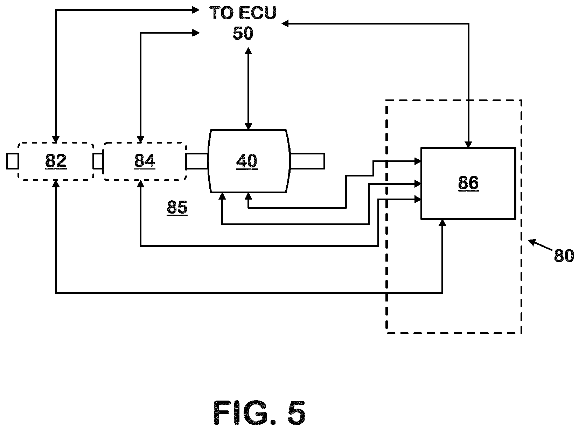

The hydrocarbon level of exhaust may be increased by the ECU 50 causing the injectors 14 to inject fuel into a cylinder 12 during a post injection portion of the fuel injection cycle. In addition to late introduction of hydrocarbon into exhaust by injectors 14 or as an alternative to that fuel injector introduction, hydrocarbon may be injected into exhaust at a location in the exhaust system that is upstream of the TWC 54. Fig. 5 is a schematic illustration of an active hydrocarbon injector system 80 and a section 85 of an exhaust system that includes the aftertreatment system 40 and an adjacent portion of an exhaust system that is upstream from the aftertreatment system 40. The exhaust system section 85 includes a burner 82 and a doser 84 upstream from the aftertreatment system 40. The active hydrocarbon injector system 80 includes a hydrocarbon injector 86 that communicates with the ECU 50.

As described above, the ECU 50 receives information from a plurality of sensors that indicate whether the diesel engine 10 is being fueled by a rich mixture. The sensors may include the sensors described above and additionally one or more sensors in the doser 84, one or more sensors in the burner 82; and/or one or more sensors in the aftertreatment system 40. Sensors may also be placed elsewhere in the diesel engine 10 provided they may be used by the ECU 50 to determine whether the diesel engine 10 is being fueled by a rich air/fuel mixture.

The types of sensors that may be used, as well as their placement, are dependent on system design parameters. For example, the oxygen sensor 23 may be used to determine the amount of oxygen in the exhaust gas stream exiting the diesel engine core. Fuel sensors also may be used to determine the amount of fuel in the exhaust gas stream. Fuel injection parameters used by the ECU 50 to control operation of the diesel engine 10 are also useful in determining whether the diesel engine 10 is being fueled by a rich mixture. Other sensor types and configurations may also be employed.

The active hydrocarbon injector system 80 may include a hydrocarbon injector 86 that is connected for control by the ECU 50. The ECU 50 is configured to control the hydrocarbon injector 86 to inject a hydrocarbon into the exhaust system 85 when the information provided from the plurality of sensors indicates that the compression ignition engine 10 is being fueled by a rich air/fuel mixture. Alternatively, the ECU 50 may be configured to control the hydrocarbon injector 86 to inject hydrocarbon into the exhaust system 85 when reduction of NOₓ by the three way catalyst 54 is desired or required, for example such as when exhaust gas recirculation is reduced or stopped. The ECU 50 may control the operation of other components of the exhaust system section 85, or a dedicated controller for the hydrocarbon injector system 80 may be provided. The injected hydrocarbon may be in liquid or gaseous form and may be injected by the hydrocarbon injector 86 at one or more locations.

According to certain embodiments, the hydrocarbon being injected may be diesel fuel, which may be generally supplied to the active hydrocarbon injector system 80 from the fuel tank or other reservoir of the associated vehicle. Additionally, the ECU 50 may be configured to control the quantity and/or duration of time that hydrocarbon is injected into the exhaust stream may be adjusted, such as, for example, based on the degree to which the engine 10 is fueled by a lean or rich air/fuel mixture. The ECU 50 may also be configured to account for a variety of other factors beside the condition of the exhaust stream when determining the quantity or duration for which hydrocarbons are to be injected into the exhaust stream. For example, ECU 50 may further elevate the quantity of and/or duration that hydrocarbons are to be injected into the exhaust stream based on the sensed and/or calculated loss of performance of the TWC 54 such as performance loss or deterioration associated with the aging of the TWC 54.

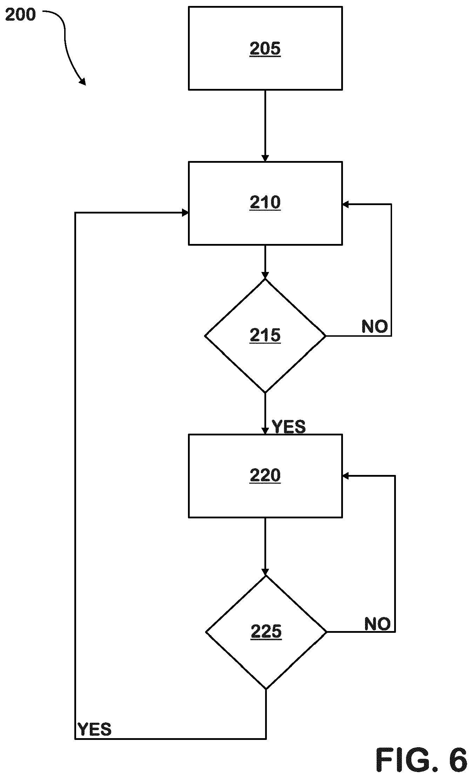

FIG. 6 is a flow diagram of operations that may be executed to inject hydrocarbon into exhaust gas of a compression ignition engine, such as engine 10. As shown, a flowing exhaust gas from the engine is provided at 205. The exhaust gas from the engine includes NOₓ. At operation 210, a direct and/or indirect determination is made as to whether the engine 10 is being fueled by a lean or rich air/fuel mixture. If the engine 10 is not being fueled by a rich air/fuel mixture as decided at operation 215, the method returns to operation 210. However, fueling by a rich mixture is detected at operation 215, an amount of hydrocarbon (HC) is injected into the gas exhaust which, in turn, is provided to the TWC at operation 220. At operation 225, the method may determine whether the injected hydrocarbon is sufficient to reach desired exhaust parameters. Such parameters may include whether the NOₓ has been reduced below a predetermined level by the TWC. If it has not, operation 220 may be re-executed until the desired exhaust parameters are detected at operation 225.

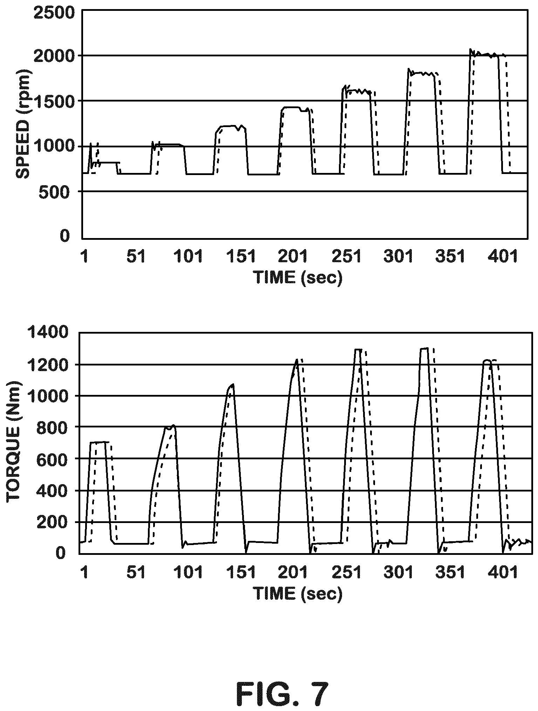

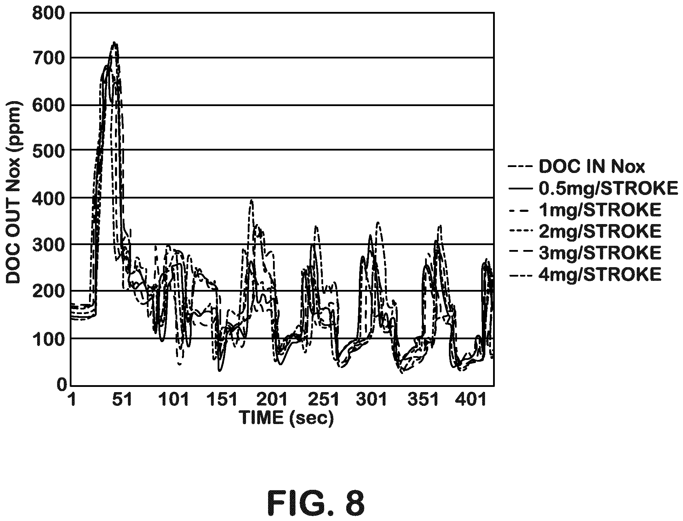

FIG. 7 shows variations in engine speed and outputted torque during transient operation of an exemplary diesel engine system, such as the one shown in FIG. 1. FIG. 8 show variations in NOₓ output from the TWC under the transient operations shown in FIG. 7. Moreover, for exemplary purposes, FIG. 8 illustrates the effect of different hydrocarbon injection rates per engine stroke have on the level of NOₓ that is outputted from the TWC. Moreover, FIG. 8 generally identifies the injection rates as "a," "b," "c," "d," and "e", with the rate of injection increasing in ascending order from "a" (lowest injection rate) to "e" (highest injection rate). For comparison purposes, also charted is the level of NOₓ entering into the TWC. Additionally, for further comparison purposes, in the absence of injecting hydrocarbons into the exhaust stream, the level of NOₓ exiting the TWC would assumed to be the same as the level of NOₓ entering the TWC.

The transient operations shown in FIG. 7 were executed multiple times to arrive at the data shown in FIG. 8. In each execution, different amounts of hydrocarbon were injected into the exhaust gas stream. As shown by FIG. 8, among other things, the overall NOₓ that is outputted from the TWC during such transient conditions is reduced when hydrocarbon has been injected into the exhaust gas stream. As shown, various levels of hydrocarbon injection achieve different levels of NOₓ reduction in the exhaust gas outputted from the TWC. Optional amounts of hydrocarbon injection for various systems may be derived by employing controlled tests on the engine on a dynamometer.

In another embodiment, the first and second catalysts are sized and formulated to reduce NOx emissions and maintain NOx emissions below a first predetermined level, preferably throughout the entire operating range of the engine, and the exhaust gases are also treated with an SCR catalyst (in the presence of ammonia such as from DEF dosed upstream of the SCR catalyst) which reduces NOₓ emissions to a second predetermined level which is less than the first level. It is well known to reduce NOx emissions from compression ignition internal combustion engines using selective catalytic reduction (SCR). When used to reduce NOx emissions from a diesel engine, selective catalytic reduction involves injecting atomized urea or ammonia gas into the exhaust stream of the engine prior to the exhaust stream being treated with an SCR catalyst, such as flowing across or through an SCR catalyst. The treatment of exhaust gas by the SCR catalyst may be prior to, during, or after treatment of the exhaust gas by the first and second catalysts (which may be a DOC and three way catalyst).

The main components of a common SCR system are a tank for storing urea, an injection system for delivering the urea into the exhaust (which dosing is typically controlled by an ECU based on various sensed or determined engine and/or exhaust conditions), and an SCR catalyst across which NOₓ reduction to occurs. A shortcoming of SCR systems is the frequency with which the urea storage tank needs to be refilled. By using the first and second catalysts for reducing NOx emissions to a first predetermined level as described herein (which first predetermined level may be, for instance, still above a regulatory maximum NOx emission level) in combination with an SCR system for further reducing the NOx emissions to a second, lower level across an SCR catalyst, the NOx emissions may be maintained at or below the second, lower level (which may be for instance below a regulatory maximum NOx emission level) in a manner such that less urea (or other reductant used in the SCR system) is required than would otherwise be required by an SCR system itself to keep the NOx emission level that low.
While it is known to use NOx traps in aftertreatment systems to keep NOx emissions below a predetermined level, a shortcoming of NOx traps which is overcome by various embodiments disclosed herein is that they have a maximum NOx storage capacity. So, for instance, in aftertreatment systems using a NOx trap, after some period of continuous operation the NOx trap would no longer be able to trap any additional NOx present in the exhaust and a control system would be required to purge the NOx trap at certain intervals to then allow further trapping of additional NOx. Contrarily, the two catalyst systems disclosed herein convert NOx in real time without storing accumulated trapped NOx, so that NOx conversion and reduction can occur continuously regardless of how long the engine is operated continuously, and without the need for controls for carrying out purging operations.

## Claims

1. A method of operating a compression ignition engine to limit NOx exhaust emissions, comprising:
operating the engine at a first power output by providing a first, lean air/fuel mixture to a combustion chamber of the engine to generate exhaust gas;
receiving a request for an increased power output from the engine, that is greater than the first power output;
providing a second air/fuel mixture to the combustion chamber of the engine which is at stoichiometric or more rich than stoichiometric in response to the request for an increased power output from the engine; and
treating a flow of exhaust gas with a first catalyst formulated to reduce NOx emissions during operation of the engine with the lean air/fuel mixture and; and
also treating the flow of exhaust gas with a second catalyst formulated to reduce NOx emissions during operation of the engine with the second, non-lean air/fuel mixture.

2. The method of Claim 1 in which the first catalyst is formulated to also reduce NOx emissions during operation of the engine with the non-lean air/fuel mixture.

3. The method of Claim 1 in which the first catalyst is a diesel oxidation catalyst.

4. The method of Claim 1 in which the second catalyst is a three way catalyst.

5. The method of Claim 1 in which the first catalyst is sized and formulated to reduce NOx emissions to below a predetermined level during operation of the engine with the lean air/fuel mixture.

6. The method of Claim 1 in which the second catalyst is sized and formulated to reduce NOx emissions to below a predetermined level during operation of the engine with the non-lean air/fuel mixture.

7. The method of Claim 6 in which the second catalyst is sized and formulated to reduce NOx emissions to below a predetermined level during operation of the engine with the non-lean air/fuel mixture throughout the entire operating range of the engine.

8. The method of Claim 1 in which the first catalyst is sized and formulated to reduce NOx emissions to below a predetermined level during operation of the engine with the lean air/fuel mixture, and the second catalyst is sized and formulated to reduce NOx emissions to below the predetermined level during operation of the engine with the non-lean air/fuel mixture.

9. The method of Claim 5 in which the predetermined level is 0.2g NOx/hp-hr.

10. The method of Claim 6 in which the predetermined level is 0.2g NOx/hp-hr.

11. The method of Claim 8 in which the predetermined level is 0.2g NOx/hp-hr.

12. The method of Claim 8 in which the predetermined level is 0.1g NOx/hp-hr.

13. The method of Claim 8 in which the predetermined level is 0.01 NOx/hp-hr.

14. The method of Claim 1 in which the first catalyst and the second catalyst are formulated to continue to reduce NOx in exhaust without NOx saturation of the first or second catalyst regardless of the period of continuous operation.

15. The method of claim 1 in which:
i) the first and second catalysts reduce NOx emissions to keep NOx emissions below a first predetermined level during operation of the engine with a lean air/fuel ratio as well as during operation of the engine with a non-lean air/fuel ratio; and
ii) the exhaust gases are also treated with an SCR catalyst in an environment which reduces NOx emissions to a second predetermined level which is less than the first level.
